# EUROPÄISCHE PATENTSCHRIFT

(11) **EP 4 067 702 B1**
(45) Veröffentlichungstag und Bekanntmachung des Hinweises auf die Patenterteilung: **16.09.2026**
(21) Anmeldenummer: 22152337.6
(22) Anmeldetag: 20.01.2022
(51) Int. Cl.: F16H 61/4035, F15B 21/14, F16H 61/4043, F16H 61/47, F16H 57/04

(54) **VORRICHTUNG**
DEVICE
DISPOSITIF

(30) Priorität: 03.04.2021 DE 102021001733
(43) Veröffentlichungstag der Anmeldung: 05.10.2022
(73) Patentinhaber: Hydac Fluidtechnik GmbH, 66280 Sulzbach/Saar (DE)
(72) Erfinder: Bastian, Jörg, 66287 Quierschied (DE); Gerhold, Johannes, 66280 Sulzbach (DE)
(74) Vertreter: Bartels und Partner, Patentanwälte

(56) Entgegenhaltungen:
- CN-A- 103 779 873
- DE-A1- 102010 045 541
- DE-T5- 112004 002 201
- JP-A- 2014 066 259

## Beschreibung

Die Erfindung betrifft eine Vorrichtung zur Umwandlung hydraulischer Energie in elektrische Energie mit den Merkmalen im Oberbegriff des Anspruchs 1.

Durch DE 10 2017 001 203 A1 ist eine Antriebseinrichtung zur Energieversorgung hochbelasteter Elektromotoren bekannt, mit einem den betreffenden Elektromotor versorgenden Generator, der durch eine Verbrennungskraftmaschine antreibbar ist, wobei ein hydraulisches Hybridsystem vorgesehen ist, das zumindest einen Hydrospeicher und eine mit dem Generator mechanisch kuppelbare Verstell-Motor-Pumpeneinheit aufweist, mittels deren im Pumpbetrieb hydraulische Energie im Speicher speicherbar ist, die im Motorbetrieb der Verstell-Pumpeneinheit als zusätzliche Antriebsleistung des Generators nutzbar ist.

Da das Hybridsystem bei hohen Leistungsanforderungen, wie dies beim Starten eines gegen Last anlaufenden Elektromotors der Fall ist, zusätzlich zur Verbrennungskraftmaschine des Fahrzeuges ein Drehmoment zur Verfügung stellen und so den Generator stützen kann, kann die Verbrennungskraftmaschine entsprechend der Nennleistung des Elektromotors ausgelegt werden und braucht daher demgegenüber nicht um ein Mehrfaches überdimensioniert zu sein, um eine stabile Stromversorgung des Elektromotors sicherzustellen.

Durch DE 10 2008 011 141 B4 ist eine Energiewandlereinrichtung bekannt, insbesondere zum Wandeln von mechanischer in hydraulische Energie und von dieser in elektrische Energie, die als Energietransportmedium ein Steuerfluid einsetzt, das in zwei unterschiedlichen Steuerkreisen geführt ist, die für einen Energietransfer über eine Kopplungseinrichtung miteinander in Wirkverbindung stehen, wobei der eine Steuerkreis der Energieeinspeisung, insbesondere in Form von mechanischer Energie, und der andere Steuerkreis dem Energieabtransport in Form gewandelter Energie, insbesondere elektrischer Energie, dient.

Durch die Aufteilung in zwei unterschiedliche Steuerkreise lässt sich die dazwischen angeordnete Kopplungseinrichtung betreiben mit der Folge, dass die Energieeinspeisung im einen Steuerkreis vom Energieabtransport im anderen Steuerkreis zumindest insoweit voneinander separiert ist, dass sie in ihrem Betrieb sich nicht gegenseitig stören mit der Folge, dass nachteilige Rückkopplungseffekte, insbesondere in Richtung der Energieeinspeisung für die Wandlereinrichtung, mit Sicherheit vermieden ist.

Die CN 103 779 873 A beschreibt eine Vorrichtung zur Umwandlung hydraulischer Energie in elektrische Energie mit den Merkmalen im Oberbegriff des Anspruchs 1, aufweisend einen Hydromotor, Hydraulikanschlüsse, einen Generator und elektrische Anschlüsse, wobei der Hydromotor mittels den Hydraulikanschlüssen an eine externe Versorgungsquelle anschließbar ist, und wobei der Generator mittels der elektrischen Anschlüsse an einen elektrischen Verbraucher zum Abführen der elektrischen Leistung des Generators und zum Ansteuern des elektrischen Verbrauchers anschließbar ist.

Weitere derartige Vorrichtungen gehen aus der DE 10 2010 045 541 A1, der DE 11 2004 002 201 T5 und der JP 2014-066259 A hervor.

Ausgehend von diesem Stand der Technik liegt der Erfindung die Aufgabe zugrunde, eine Vorrichtung zur Umwandlung hydraulischer Energie in elektrische Energie zu schaffen, die es erlaubt, elektrische Verbraucher einer Arbeitsgerätschaft, die mit einem Fahrzeug koppelbar ist, über den Einsatz der Hydraulikversorgungsanlage dieses Fahrzeuges mit elektrischer Leistung zu versorgen. Eine dahingehende Aufgabe löst eine Vorrichtung mit den Merkmalen des Patentanspruches 1.

Gemäß dem Kennzeichen von Anspruch 1 ist vorgesehen, dass der Hydromotor eine Abtriebswelle aufweist, die mittels einer Kupplungseinrichtung mit einer Antriebswelle des Generators zum Ausbilden einer Baueinheit des Hydromotors und des Generators verbunden ist, dass zum Aufständern oder Festlegen der Baueinheit ein Trägerflansch der Vorrichtung mit einer Mittenöffnung dient, die von der Kupplungseinrichtung der Wellen in drehbarer Weise durchgriffen ist, und entweder dass zwei diametral einander gegenüberliegende Festlegeflansche auf einer Unterseite des Trägerflansches mittig einen Strömungskanal ausbilden, der der Luftführung von Kühlluft eines Lüfterrades eines Lüftermotors des Generators dient, die an dem Trägerflansch vorbeigeführt der Kühlung des Generators auf der Seite des Hydromotors dient, oder dass in eine Flanschplatte des Trägerflansches segmentförmig Luftschlitze eingebracht sind, die der Luftführung für den Generator dienen, und dass bei dem Generator an einer freien, dem Hydromotor gegenüberliegenden Stirnseite eine Luftöffnung angebracht ist, die die Zufuhr von Umgebungsluft erlaubt, welche ein Lüfterrad eines Lüftermotors des Generators durch die Schlitze des Trägerflansches zwecks Kühlen des sich auf der gegenüberliegenden Seite an dem Trägerflansch anschließenden Hydromotors zwingt.

Dadurch, dass ein Hydromotor und ein Generator über eine Kupplungseinrichtung miteinander verbunden eine Baueinheit ausbilden, dass der Hydromotor mittels Hydraulikanschlüssen an eine externe Versorgungsquelle in Form einer Hydropumpe als Teil eines Fahrzeuges anschließbar ist, und dass zum Abführen der elektrischen Leistung des Generators mittels elektrischer Anschlüsse mindestens ein elektrischer Verbraucher ansteuerbar ist, der als Teil einer Arbeitsgerätschaft mit dem Fahrzeug koppelbar ist, ist eine Umwandlungsvorrichtung geschaffen, mittels der die hydraulische Energie, die im Betrieb von dem Fahrzeug grundsätzlich bereitgestellt ist, über die Baueinheit in elektrische Energie umgewandelt dem Ansteuern elektrischer Verbraucher dient, die als Teil einer eigenständigen, insbesondere tauschbaren Arbeitsgerätschaft mit dem Fahrzeug gekoppelt ist.

Die erfindungsgemäße Baueinheit bestehend aus Hydromotor, Generator und Kupplungseinrichtung stellt eine Art modulare Insellösung dar, die sich auch jederzeit an bestehende Fahrzeuge und deren Arbeitsgerätschaften nachrüsten lässt. Als Fahrzeuge sind hier regelmäßig Traktoren oder fahrbare Baumaschinen angesprochen, die mit speziellen Arbeitsgerätschaften auch im Rahmen von Vorbaugeräten für bestimmte Aufgabengebiete zusammenwirken, wobei im Rahmen einer gesteigerten Variabilität für verschiedene Anwendungszwecke bei bestehendem Fahrzeug eine Arbeitsgerätschaft gegen eine andere auch tauschbar ist.

Sofern die erfindungsgemäße Umwandlungsvorrichtung bei Traktoren Anwendung findet, sind für den Einsatz der genannten Baueinheit im Rahmen der Agrartechnik Arbeitsgerätschaften einsetzbar, wie sie von Traktoren regelmäßig über Acker- und Wiesenflächen gezogen werden, wie beispielsweise Sämaschinen, Ballenpressen oder Feldspritzen.

Die erfindungsgemäße Vorrichtung lässt sich von ihrem Leistungsvermögen her, insbesondere was das Bereitstellen einer elektrischen Leistung anbelangt, von der Dimensionierung her an vorgebbare hydraulische Leistungsdaten einer Zugmaschine anpassen, so dass für alle möglichen Arten von Fahrzeugen mit unterschiedlichem hydraulischem Leistungsvermögen sich die Baueinheit in modularer Anpassung entsprechend einsetzen lässt. Da sich die Baueinheit über Hydraulik- und Elektrikanschlüsse ohne Weiteres mit einer hydraulischen Zentralversorgung des Fahrzeuges koppeln lässt sowie mit einem jeweiligen elektrischen Verbraucher an der Arbeitsgerätschaft, ist die Baueinheit nach Durchführen einiger weniger Handgriffe einsatzbereit. Da die Baueinheit von ihrem Gewicht sowie von ihrer Baugröße her leicht handhabbar ist, lässt sie sich auch im Rahmen eines Nachrüstsatzes in kostengünstiger Weise mit verschiedenen Arten von Arbeitsgerätschaften mit elektrischen Verbrauchern kombinieren, um dann für einen Betrieb der Arbeitsgerätschaft mittels den Hydraulikanschlüssen an die externe Versorgungsquelle, regelmäßig in Form einer Hydropumpe des Fahrzeuges, verbunden zu werden. Insoweit ist die Baueinheit nahezu zu jeder Traktorhydraulik respektive Fahrzeughydraulik kompatibel.

Sofern die Arbeitsmaschine, insbesondere in Form eines modernen Traktors oder einer Baumaschine, über technisch aufwendige Hydraulikversorgungseinrichtungen verfügt im Umfang von ansteuerbaren Hydropumpen, kann die Umwandlungsvorrichtung in der einfachsten Ausführungsform aus der Kombination eines Hydromotors und eines Generators bestehen, die über eine Starrkupplungseinrichtung miteinander verbunden die Baueinheit ausbilden. Handelt es sich um fahrbare Arbeitsmaschinen älterer Bauart oder handelt es sich um Hydraulikversorgungskonzepte in einfacher Realisierung, weist beispielsweise eine Zugmaschine, wie ein Traktor, als Hydropumpe eine Konstantversorgungspumpe auf, ist für die angesprochene Baueinheit eine Ventileinrichtung notwendig, die den Fluidstrom zwischen den Hydraulikanschlüssen und dem Hydromotor entsprechend steuern kann. Vorzugsweise ist hierbei vorgesehen, dass in einer Zulaufleitung zwischen einem Druckversorgungsanschluss als dem einen Hydraulikanschluss und der Eingangsseite des Hydromotors als ein erstes Ventil ein Volumenstromregler als Teil der dahingehenden Ventileinrichtung angeordnet ist, beispielsweise in Form einer einstellbaren Blende.

In besonders bevorzugter Weise ist dabei vorgesehen, dass eine Ablaufleitung an der Ausgangsseite des Hydromotors zu einem Tankanschluss als dem weiteren Hydraulikanschluss führt und dass zwischen Zu- und Ablaufleitung in Zulaufrichtung vor dem ersten Ventil in Form des Volumenstromreglers ein zweites Ventil geschaltet ist, vorzugsweise in Form einer Druckwaage. Während die Druckwaage bevorzugt innerhalb der Ventileinrichtung hydraulisch angesteuert wird, kann anstelle einer einstellbaren Blende ein elektrisch ansteuerbares Proportional-Stromdrosselventil treten, mit dem es möglich ist, von der Zugmaschine aus zwecks Ansteuern der elektrischen Leistungsabgabe über den Generator, die mittels der Ventileinrichtung zu führenden Volumenströme druckabhängig und stufenlos zu regeln.

Vorzugsweise werden dabei als Steuerdrücke für den Steuerkolben der Druckwaage auf gegenüberliegenden Seiten anliegend die Zulaufdrücke in der Zulaufleitung in Zulaufrichtung vor und hinter dem ersten Ventil in Form des Volumenstromreglers eingesetzt.

Zur Absicherung des hydraulischen Kreises mit der Ventileinrichtung kann zwischen der Zu- und der Ablaufleitung in Zulaufrichtung hinter dem ersten Ventil in Form des Volumenstromreglers ein drittes Ventil angeordnet sein, insbesondere in Form eines federbelasteten Rückschlagventils, das in Richtung der Zulaufleitung öffnet.

Bei einer weiteren bevorzugten Ausführungsform der erfindungsgemäßen Umwandlungsvorrichtung ist vorgesehen, dass anstelle der Druckwaage ein Sperrventil, beispielsweise in Form eines Ventilstopfens eingesetzt ist. Des Weiteren weist die Vorrichtung eine Steuerleitung und einen Load-Sensing-Anschluss auf und es wird in Fluidförderrichtung gesehen hinter dem ersten Ventil, vorzugsweise in Form des Volumenstromreglers in der Zulaufleitung, ein Load-Sensing-Druck über die Steuerleitung an den Load-Sensing-Anschluss als einem weiteren Hydraulikanschluss an die Versorgungseinrichtung der Arbeitsmaschine weitergeleitet. Mit dem dahingehenden Load-Sensing-Druck lässt sich eine Verstellpumpe der Arbeitsmaschine respektive des Traktors ansteuern und lastabhängig die Fluidversorgung für den Hydromotor der Baueinheit sicherstellen. Dergestalt ist über ein zuschaltbares LS-System eine druckunabhängige Volumenstromregelung ermöglicht.

In weiter besonders bevorzugter Weise ist vorgesehen, dass die Kupplung eine Klauenkupplung ist. Aufgrund der dahingehenden starren Kupplung ist ein Antriebsschlupf zwischen Hydromotor und Generator vermieden, was zu einer verbesserten Leistungsabgabe von elektrischer Leistung auf der Generatorseite führt. Als besonders vorteilhaft hat es sich weiter erwiesen, den Hydraulikmotor als Außenradzahnmotor auszubilden und den Generator als Gleichstromgenerator.

Im Folgenden wird die erfindungsgemäße Vorrichtung zur Umwandlung hydraulischer Energie in elektrische Energie anhand von Ausführungsbeispielen nach der Zeichnung näher erläutert. Dabei zeigen in prinzipieller und nicht maßstäblicher Darstellung die
- Fig. 1 und 2: in der Art von kombinierten hydraulisch-elektrischen Schaltplänen die angestrebte Energieumwandlung;
- Fig. 3: in der Art einer Längsschnittdarstellung die wesentlichen Komponenten der Baueinheit, gebildet aus einem Hydromotor und einem Generator sowie dazwischenliegender Kupplungseinrichtung;
- Fig. 4: in perspektivischer Draufsicht die wesentlichen Komponenten der Kupplungseinrichtung nach der Fig. 3;
- Fig. 5 und 6: zwei verschiedene Arten eines Trägerflanschanschlusses; einmal für eine Baueinheit nach der Fig. 3; einmal für eine Baueinheit nach der Fig. 7; und
- Fig. 7: in perspektivischer Draufsicht die wesentlichen Komponenten der Baueinheit mit an dem Hydromotor angeordneter Ventileinrichtung.

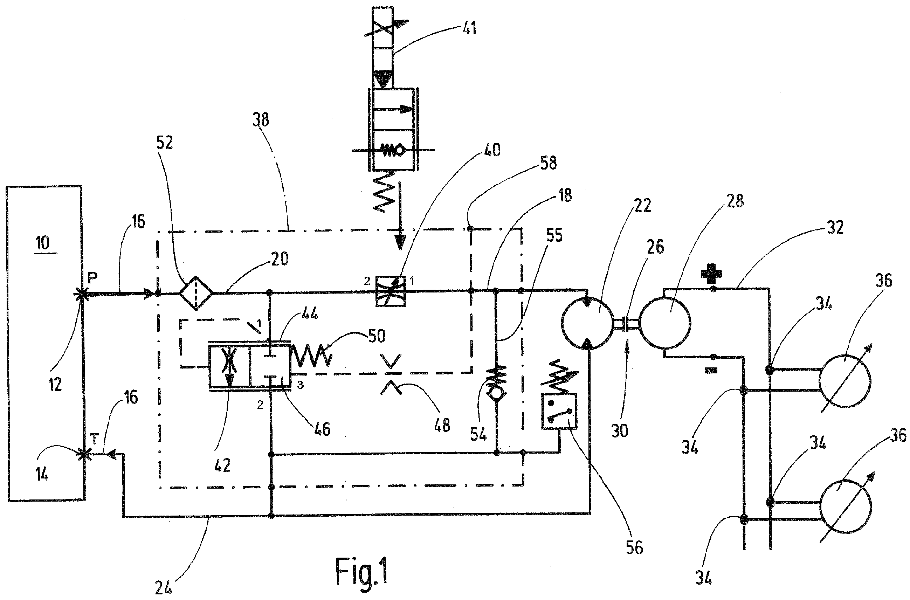

In der Fig. 1 ist als Bestandteil einer fahrbaren Arbeitsmaschine, wie einem Traktor, eine leistenförmige Anschlusseinrichtung 10 gezeigt mit zwei Hydraulikanschlüssen 12, 14, einmal in Form eines Druckversorgungsanschlusses P und einmal in Form eines Rücklauf- oder Tankanschlusses T. Der Druckversorgungsanschluss P führt zu einer nicht näher dargestellten Hydropumpe des Traktors und der Tankanschluss T ist an einen Vorratstank der dahingehenden Zugmaschine angeschlossen. Zur Versorgung des Druckversorgungsanschlusses P mit Hydraulikmedium vorgebbaren Druckes dient auf Seiten des Traktors eine nicht näher dargestellte Hydropumpe, beispielsweise in Form einer Konstantpumpe. Die dahingehende Hydropumpe entnimmt das Fluid aus dem an den Tankanschluss T angeschlossenen Vorratstank. Die Hydropumpe des Traktors wird von seiner Verbrennungskraftmaschine regelmäßig in Form eines Dieselmotors angetrieben. Im Betrieb liefern solche Traktor-Hydraulikversorgungsaggregate Volumenströme in der Größenordnung von 40 bis 100 I/min. bei max. 200 bar Versorgungsdruck.

Die Hydraulikanschlüsse 12, 14 können als Schnellkupplungen ausgebildet sein, um eine rasche Verbindung zu Verbindungsleitungen 16 einer hydraulischen Kreislaufführung 18 herzustellen; aber auch wieder lösen zu können. Eine der Verbindungsleitungen 16 ist Teil einer Zulaufleitung 20, die den Druckversorgungsanschluss P gemäß der Darstellung nach der Fig. 1 mit der Eingangsseite eines Hydromotors 22 verbindet. Die Ablauf- oder Ausgangsseite des Hydromotors 22 ist über eine Ablaufleitung 24 mit dem Tankanschluss T gekoppelt.

Wie sich weiter in prinzipieller Darstellung aus der Fig. 1 ergibt, ist der Hydromotor 22 mittels einer Kupplungseinrichtung 26 mit einem Generator 28 mechanisch verbunden. Insoweit bildet der Hydromotor 22 über die Kupplungseinrichtung 26 mit dem Generator 28 eine Baueinheit 30 als Ganzes aus. Zum Abführen der elektrischen Leistung ist der Generator 28 mit einem elektrischen Netz 32 verbunden mit einzelnen elektrischen Anschlüssen 34, an die paarweise elektrische Verbraucher 36 in Parallelschaltung an das Netz 32 angeschlossen sind. Wie mit den Symbolen + und - angedeutet, handelt es sich um ein Gleichspannungsnetz und die elektrischen Verbraucher 36 sind aus Gleichstrommotoren gebildet. Die dahingehenden Verbraucher 36, die in sehr großer Anzahl an das Netz 32 angeschlossen sind, können beispielsweise einen nicht näher dargestellten Drehteller antreiben zwecks Abgabe von kornmäßig vereinzeltem Saatgut im Rahmen des Betriebs einer nicht näher dargestellten Sämaschine, die sich als gezogene Arbeitsgerätschaft mittels des Traktors über eine Acker- oder Wiesenfläche ziehen lässt.

Bei modernen Traktorlösungen ist die Hydraulikversorgung des Traktors derart fortschrittlich ausgelegt, dass mittels einer von Hand betätigbaren, zusätzlichen Steuerung im Führerhaus, sich die Drehzahl des Hydromotors 22 vorgeben lässt und mithin die elektrische Abgabeleistung am Generator 28.

Handelt es sich jedoch um einen Traktor älterer oder üblicher Bauart weist dieser im Rahmen der Druckversorgung eine übliche Konstantpumpe als Hydropumpe auf. Zum Ansteuern des dahingehenden Fluid-Versorgungsstromes ist mithin eine als Ganzes mit 38 bezeichnete Ventileinrichtung vonnöten, wie sie beispielhaft in der Fig. 1 wiedergegeben ist. So ist in der Zulaufleitung 20 zwischen dem Druckversorgungsanschluss P als dem einen Hydraulikanschluss 12 und der Eingangsseite des Hydromotors 22 ein erstes Ventil 40 in Form eines Volumenstromreglers angeordnet, der nach der Schaltplandarstellung aus einer einstellbaren Blende bestehen kann. Optional kann anstelle der einstellbaren Blende als Volumenstromregler 40 ein elektromechanisch betätigbares Proportional-Stromdrosselventil 41 vorgesehen sein, das symbolisch in der Fig. 1 oberhalb der Blende als Volumenstromregler 40 dargestellt ist und der gezeigte Pfeil gibt die Richtung eines möglichen Austausches mit der Blende wieder. Das dahingehende Proportional-Stromdrosselventil 41 kann Volumenströme im Zufuhrkreis für den Hydromotor 22 druckabhängig und stufenlos regeln.

Zwischen der Zulaufleitung 20 und der Ablaufleitung 24 ist in Zulaufrichtung vor dem ersten Ventil 40 ein zweites Ventil 42 geschaltet, in Form einer Druckwaage 44. Der Steuerkolben 46 der Druckwaage 44 ist auf seinen gegenüberliegenden Stirnseiten einem entsprechenden Steuerdruck ausgesetzt, wofür der Zulaufdruck in der Zulaufleitung 20 vor und hinter dem ersten Ventil 40 dient. Der in Zulaufrichtung hinter dem ersten Ventil 40 abgegriffene Steuerdruck wird dabei über eine Konstantblende 48 geführt und wirkt zusammen mit einer Rückstellfeder 50 als Rückstellkraft auf den Steuerkolben 46 ein. Nimmt der Zulaufdruck vor dem ersten Ventil 40 in der Zulaufleitung 20 zu, wird die Druckwaage 44 entsprechend aufgesteuert und nimmt eine regelnde Durchlassstellung zwischen Zulaufleitung 20 und Ablaufleitung 24 ein.

Um etwaige Verunreinigungen, insbesondere in Form von partikulären Verschmutzungen, aus der hydraulischen Kreislaufführung 18 herauszuhalten, ist vor der Abzweigstelle mit dem zweiten Ventil 42 ein Filter 52 eingebracht, der auch aus einem Drahtsiebgewebe bestehen kann. Als Absicherung der Kreislaufführung 18 ist noch ein drittes Ventil 54 zwischen die Zulaufleitung 20 und die Ablaufleitung 28 geschaltet, wobei hierfür das Ventil 54 in eine Verbindungsleitung 55 parallel zu dem zweiten Ventil 42 geschaltet ist. Das dritte Ventil 54 ist hinter dem ersten Ventil 40 in die Zulaufleitung 20 geschaltet. Bei dem dritten Ventil 54 handelt es sich um ein federbelastetes Rückschlagventil, das in Richtung der Zulaufleitung 20 für den Hydromotor 22 öffnet. An das dritte Ventil 54 kann noch in Richtung der Ablaufseite eine Tankdrucküberwachung 56 in üblicher und daher nicht mehr näher beschriebener Weise angeschlossen sein. Die Drehzahl des Generators 28 wird demgemäß bedarfsweise über den Hydrauliksteuerblock in Form der Ventileinrichtung 38 geregelt. Als elektrische Ausgangsleistung des Generators 28 dienen Versorgungsspannungen in Form von Gleichstrom je nach Generatorgröße von 12, 14, 24, 28, 48 oder 56 Volt. Der Hydromotor 22 arbeitet hierbei in einem Drehzahlbereich zwischen 2500 bis 5500 U/min, bei einem bevorzugten Maximaldruck von etwa 180 bar.

In der Vergangenheit wurden auch bereits Anstrengungen unternommen, einen Generatorbetrieb für einen Generator 28 über die Lichtmaschine des Traktors zu ermöglichen. Allein ist die dahingehenden Versorgungsanordnung für das Auftreten hoher Spitzenströme und hoher elektrischer Dauerlasten nicht geeignet und die aufgezeigte elektrische Energieübertragung an sich ist aufwendig und teuer und setzt den Einsatz sehr großer Lichtmaschinen voraus. So sind durchaus bis zu 86 Elektromotoren 36 vonseiten des Generators 28 im Rahmen des Betriebs einer Sämaschine zu versorgen, was durch den Einsatz einer üblichen Lichtmaschine auf der Traktorseite nicht gelingt.

Wie sich weiter aus der Fig. 1 ergibt, kann die als Ventilblock ausgestaltete Ventileinrichtung 38 auch noch über eine Messanschlussstelle 58 verfügen, die den Anschluss eines Druckmessgerätes erlaubt zwecks Überwachen des Zulaufdruckes in der Zulaufleitung 20. Die Pfeildarstellung für die elektrischen Motoren in Form der Verbraucher 36 soll verdeutlichen, dass die Motordrehzahl abhängig ist von der jeweils abgegebenen Generatorleistung des Generators 28.

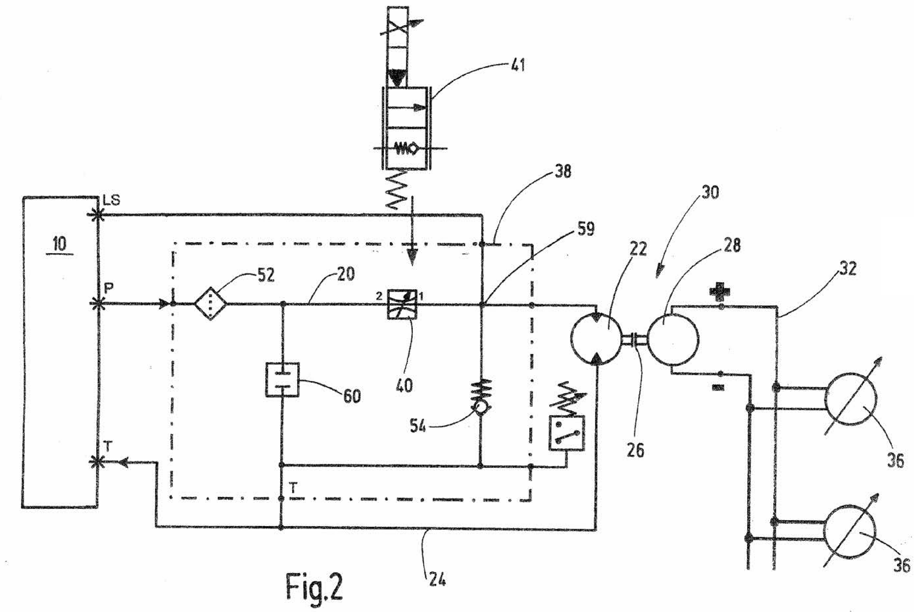

Das Ausführungsbeispiel nach der Fig. 2 entspricht weitgehend der Schaltplandarstellung nach der Fig. 1, so dass die Lösung nach der Fig. 2 nur noch insofern erläutert wird, als sie sich wesentlich von der Lösung nach der Fig. 1 unterscheidet und dieselben Bauteile werden mit denselben Bezugszeichen wiedergegeben. Die insoweit getroffenen Ausführungen gelten dann auch für das Ausführungsbeispiel nach der Fig. 2. Bei der Lösung nach der Fig. 2 weist die Zugmaschine respektive der Traktor als Hydropumpe eine sogenannte Verstellpumpe auf, beispielsweise in Form einer üblichen Schwenkwinkelpumpe, die bedarfsabhängig von einem Load-Sensing-Druck LS der hydraulischen Kreislaufführung 18 angesteuert wird. Hierfür greift ein Load-Sensing-Anschluss als ein weiterer Hydraulikanschluss LS in die Zulaufleitung 20 ein und zwar an einer Abgriffstelle 59 zwischen dem ersten Ventil 40 und dem Hydromotor 22. Durch das insoweit zuschaltbare LS-System ist eine druckunabhängige Volumenstromregelung für den Hydromotor 22 möglich.

Im Hinblick auf die zum Einsatz kommende verstellbare Hydropumpe ist keine Druckwaage 44 mehr vonnöten und die dahingehende Ventilstelle wird im Sinne eines Platzhalters durch ein Sperrventil, insbesondere in Form eines Ventilstopfens 60, verschlossen. Das in den Fig. 1 und 2 dargestellte elektrische Netz 32 kann mit einer nicht näher dargestellten Pufferbatterie versehen sein, um dergestalt bei Schwankungen im hydraulischen Versorgungskreislauf 18 oder bei einem etwaigen Ausfall der Versorgung des Hydromotors 22 die Versorgung der elektrischen Verbraucher 36 sicherstellen zu können. In jedem Fall kann die aus Hydromotor 22, Kupplungseinrichtung 26 und Generator 28 bestehende Baueinheit 30 mit und ohne der im Bedarfsfall vorgesehenen Ventileinrichtung 38 als kompakte Baueinheit 30, auch im Rahmen eines Nachrüstsatzes, an jeder Zugmaschine und/oder jeder Arbeitsgerätschaft, beispielsweise in Form einer Sämaschine, angebracht werden. Dies hat so keine Entsprechung im Stand der Technik.

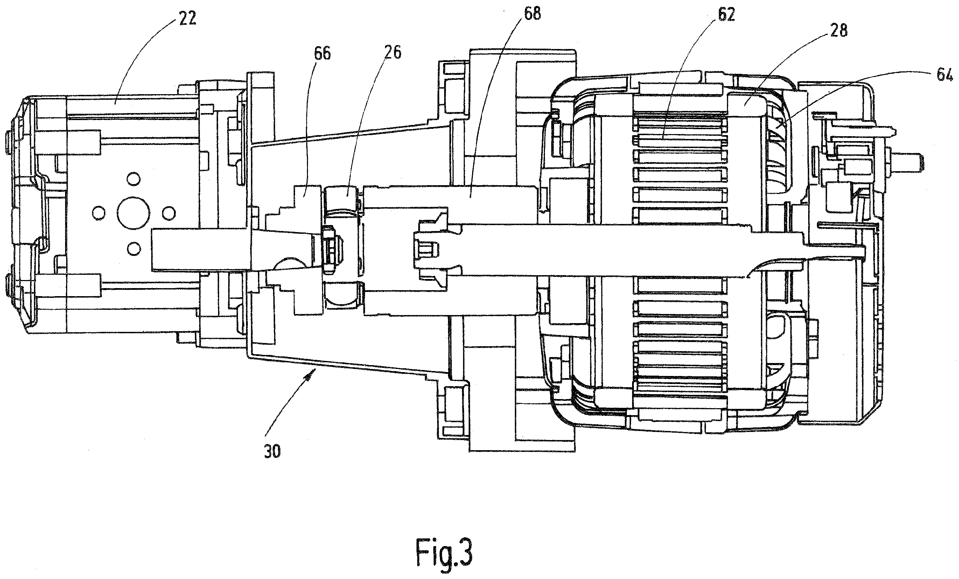

In der Fig. 3 ist eine solche Baueinheit 30 ohne Ventileinrichtung 38 näher dargestellt. In Blickrichtung auf die Fig. 3 gesehen, befindet sich auf der linken Seite der hydraulisch antreibbare Hydromotor 22, beispielsweise in Form eines nicht näher dargestellten Außenzahnradmotors, und auf der rechten Seite ist als Generator 28 ein Gleichstromgenerator dargestellt. Der Generator 28 weist in üblicher Bauweise eine elektrische Wicklung 62 auf, die als Teil eines Lüftermotors ein Lüfterrad 64 antreibt. Der Hydromotor 22 weist eine Abtriebswelle 66 auf, die mittels der Kupplungseinrichtung 26 in Form einer Klauenkupplung mit der Antriebswelle 68 des Generators 28 verbunden ist.

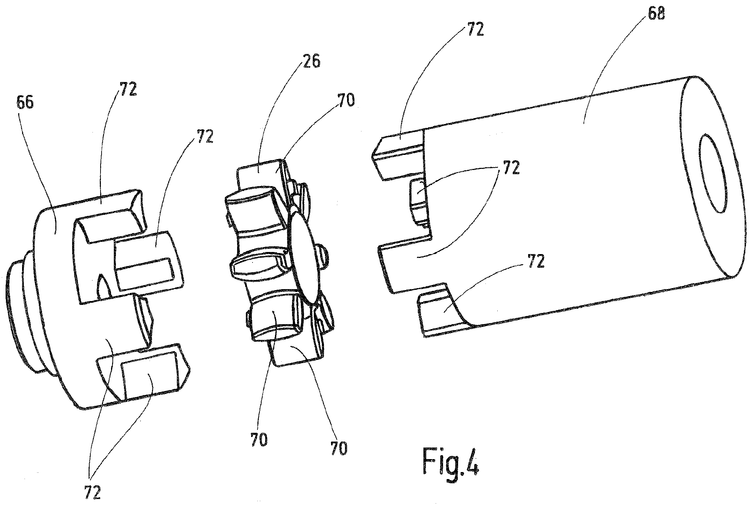

Die dahingehende Wellen-Kupplungsverbindung ist in der Fig. 4 näher dargestellt. Die in Fig. 4 in der Art einer Explosionszeichnung dargestellte Klauenkupplung weist als eigentliche Kupplungseinrichtung 26 eine Art Hohlrad auf, mit radial nach außen vorstehenden Zahnflanken 70, die auf ihren jeweils einander benachbarten Seiten ballig ausgebildet sind. In die Radialabstände zwischen den Flanken 70 greifen dreieckförmige Stege 72 ein, die gleich ausgebildet sind, wobei jeweils vier Stück auf gleichem Abstand zueinander gehalten einmal der Abtriebswelle 66 und einmal der Antriebswelle 68 zugerechnet werden können, betreffend den Hydromotor 22 bzw. den Generator 28.

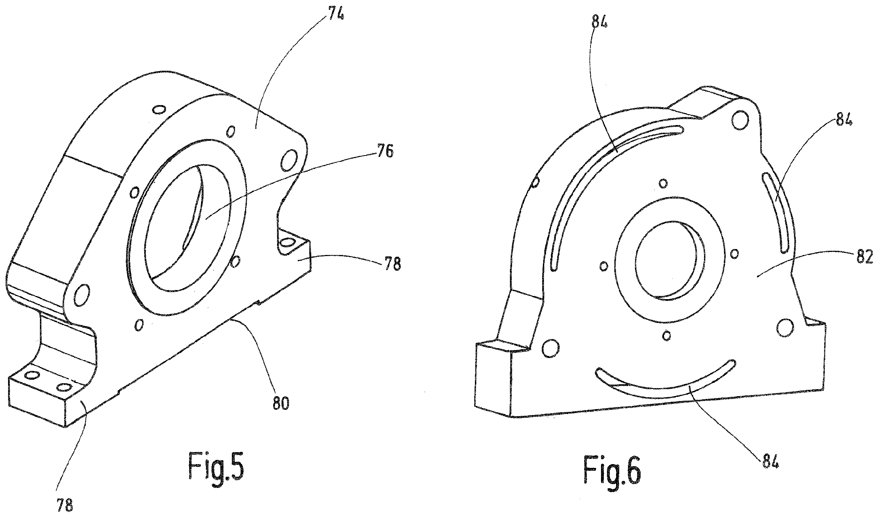

Zum Aufständern oder Festlegen der Baueinheit 30 dient gemäß der perspektivischen Darstellung nach der Fig. 5 ein Trägerflansch 74 mit einer Mittenöffnung 76, die von dem Kupplungsteil 26 der Wellen 66, 68 in drehbarer Weise durchgriffen ist. Der Trägerflansch 74 lässt sich über zwei diametral einander gegenüberliegende Festlegeflansche 78 an Drittbauteilen festlegen, wie Teilen einer mittels eines Traktors ziehbaren Arbeitsgerätschaft respektive Sämaschine. Die beiden Festlegeflansche 78 bilden in Blickrichtung auf die Fig. 5 gesehen auf der Unterseite mittig einen Strömungskanal 80 aus, der der Luftführung dient von Kühlluft des Lüfterrades 64, die insoweit an dem Trägerflansch 74 vorbeigeführt der Kühlung des Generators 28 auf der Seite des Hydromotors 22 dient.

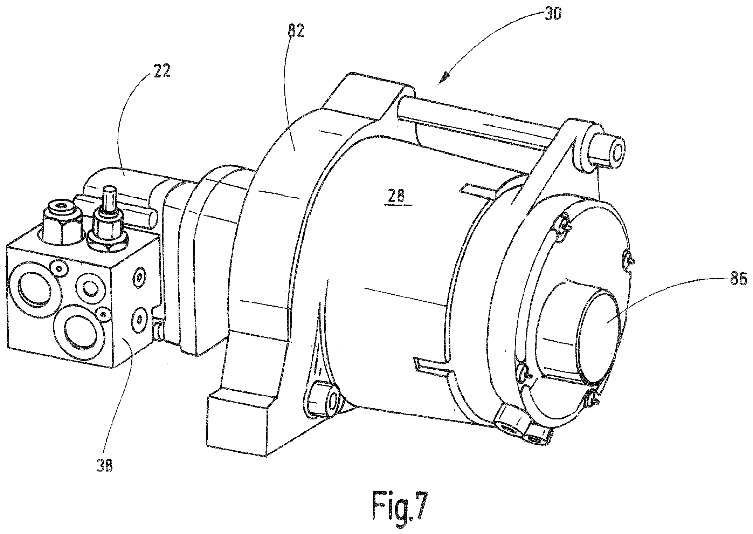

Bei einem geänderten Trägerflansch 82 nach der Fig. 6 sind in die Flanschplatte segmentförmig Luftschlitze 84 eingebracht, die der Luftführung für eine Generatorlösung 28 nach der Fig. 7 dienen. Bei dem dahingehenden Generator 28 ist an einer freien, dem Hydromotor 22 gegenüberliegenden Stirnseite eine Luftöffnung 86 angebracht, die die Zufuhr von Umgebungsluft erlaubt, welche ein nicht näher dargestelltes Lüfterrad eines Lüftermotors des Generators 28 durch die Schlitze 84 des weiteren Ständerbauteils 82 zwingt zwecks Kühlen des sich insoweit auf der gegenüberliegenden Seite an dem Trägerflansch 82 anschließenden Hydromotors 22. Die dahingehende Luftöffnung 86 kann über eine nicht näher dargestellte Kanalführung an eine zentrale Luftzufuhr der Arbeitsgerätschaft oder des Traktors angeschlossen sein.

Die in Zuströmrichtung vor dem Hydromotor 22 blockartig angeschlossene Ventileinrichtung 38 vervollständigt insoweit die Gesamt-Baueinheit 30 nach der Fig. 7. Mit dem sehr leistungsstarken Generator 28 nach der Fig. 7 lassen sich ohne Weiteres Leistungen von 7 kW erhalten, bei einem Nennstrom von 125 Ampere und einem Gleichstrom von 48 oder 56 V. In jedem Fall lassen sich auch mit dem kleineren Generator 28 nach der Fig. 3 Leistungen von 2,2 kW bei einem Nennstrom von 140 Ampere und einer Gleichstromspannung von 24 oder 28 V erreichen. Nahezu beliebige Zwischenstufen von Generatorleistungen sind hier ohne weiteres möglich, wobei die hydraulische Eintragsleistung aufseiten der Hydraulikversorgung der Zugmaschine in Form der Abgabeleistung der Hydropumpe bei durchschnittlich 180 bar und einem Fördervolumen von 40-60 l/min liegt. Auch hier sind andere Leistungsabgabedaten möglich.

Mit der erfindungsgemäßen Lösung lässt sich ohne Verschwendung von Saatgut nahezu korngenau ein Sävorgang durchführen; ebenso ist eine punktgenaue Abgabe von Düngemittel oder Unkrautvernichtungsmittel mittels Feldspritzen ermöglicht. Sofern zusätzliche Pufferbatterien zum Einsatz kommen, dient dies nicht nur als Zwischenspeicher, sondern können auch im Bedarfsfall zum Bremsen eingesetzt werden, sofern dies im Rahmen der Ansteuerung der elektrischen Verbraucher 38 notwendig wird. Ferner besteht die Möglichkeit, die im Rahmen des Schaltplans nach der Fig. 1 eingesetzte Druckwaage 44 im Bedarfsfall von Hand zu blockieren (nicht dargestellt).

## Patentansprüche

1. Vorrichtung zur Umwandlung hydraulischer Energie in elektrische Energie,
aufweisend einen Hydromotor (22), Hydraulikanschlüsse (12, 14), einen Generator (28) und elektrische Anschlüsse (34),
wobei der Hydromotor (22) mittels den Hydraulikanschlüssen (12, 14) an eine externe Versorgungsquelle (P) anschließbar ist, und
wobei der Generator (28) mittels der elektrischen Anschlüsse (34) an einen elektrischen Verbraucher (36) zum Abführen der elektrischen Leistung des Generators (28) und zum Ansteuern des elektrischen Verbrauchers anschließbar ist,
**dadurch gekennzeichnet,**
**dass** der Hydromotor (22) eine Abtriebswelle (66) aufweist, die mittels einer Kupplungseinrichtung (26) mit einer Antriebswelle (68) des Generators (28) zum Ausbilden einer Baueinheit des Hydromotors (22) und des Generators (28) verbunden ist,
**dass** zum Aufständern oder Festlegen der Baueinheit (30) ein Trägerflansch (74, 82) der Vorrichtung mit einer Mittenöffnung (76) dient, die von der Kupplungseinrichtung (26) der Wellen (66, 68) in drehbarer Weise durchgriffen ist, und
entweder
**dass** zwei diametral einander gegenüberliegende Festlegeflansche (78) auf einer Unterseite des Trägerflansches (74) mittig einen Strömungskanal (80) ausbilden, der der Luftführung von Kühlluft eines Lüfterrades (64) eines Lüftermotors des Generators (28) dient, die an dem Trägerflansch (74) vorbeigeführt der Kühlung des Generators (28) auf der Seite des Hydromotors (22) dient,
oder
**dass** in eine Flanschplatte des Trägerflansches (74) segmentförmig Luftschlitze (84) eingebracht sind, die der Luftführung für den Generator (28) dienen, und dass bei dem Generator (28) an einer freien, dem Hydromotor (22) gegenüberliegenden Stirnseite eine Luftöffnung (86) angebracht ist, die die Zufuhr von Umgebungsluft erlaubt, welche ein Lüfterrad (64) eines Lüftermotors des Generators (28) durch die Schlitze (84) des Trägerflansches (82) zwecks Kühlen des sich auf der gegenüberliegenden Seite an dem Trägerflansch (82) anschließenden Hydromotors (22) zwingt.

2. Vorrichtung nach Anspruch 1, **dadurch gekennzeichnet, dass** die Baueinheit (30) eine Ventileinrichtung (38) aufweist, die den Fluidstrom zwischen den Hydraulikanschlüssen (12, 14) und dem Hydromotor (22) steuert.

3. Vorrichtung nach Anspruch 2, **dadurch gekennzeichnet, dass** in einer Zulaufleitung (20) zwischen einem Druckversorgungsanschluss (P) als dem einen Hydraulikanschluss (12) und der Eingangsseite des Hydromotors (22) ein erstes Ventil (40), insbesondere in Form eines Volumenstromreglers, als einem Teil der Ventileinrichtung (38) angeordnet ist.

4. Vorrichtung nach Anspruch 3, **dadurch gekennzeichnet, dass** eine Ablaufleitung (24) an der Ausgangsseite des Hydromotors (22) zu einem Tankanschluss (T) als dem weiteren Hydraulikanschluss (14) führt und dass zwischen Zu- und Ablaufleitung (20, 24) in Zulaufrichtung vor dem ersten Ventil (40) ein zweites Ventil (42) geschaltet ist, insbesondere in Form einer Druckwaage (44) oder eines Sperrventiles (60).

5. Vorrichtung nach Anspruch 4, **dadurch gekennzeichnet, dass** das zweite Ventil (42) in Form der Druckwaage (44) vorgesehen ist; und dass als Steuerdrücke für den Steuerkolben (46) der Druckwaage (44) auf gegenüberliegenden Seiten anliegend die Zulaufdrücke in der Zulaufleitung (20) in Zulaufrichtung vor und hinter dem ersten Ventil (40) dienen.

6. Vorrichtung nach Anspruch 4 oder 5, **dadurch gekennzeichnet, dass** zwischen der Zu- und der Ablaufleitung (20, 24) in Zulaufrichtung hinter dem ersten Ventil (40) ein drittes Ventil (54) angeordnet ist, insbesondere in Form eines federbelasteten Rückschlagventils, das in Richtung der Zulaufleitung (20) öffnet.

7. Vorrichtung nach einem der Ansprüche 3 bis 6, **dadurch gekennzeichnet, dass** das erste Ventil (40) aus einer einstellbaren Blende oder einem Proportionalventil (41) gebildet ist.

8. Vorrichtung nach einem der Ansprüche 3 bis 7, **dadurch gekennzeichnet, dass** die Vorrichtung eine Steuerleitung und einen Load-Sensing-Anschluss (LS) aufweist; und dass hinter dem ersten Ventil (40) in der Zulaufleitung (20) ein Load-Sensing-Druck über die Steuerleitung an den Load-Sensing-Anschluss (LS) als einem weiteren Hydraulikanschluss weiterleitbar ist.

9. Vorrichtung nach einem der vorstehenden Ansprüche, **dadurch gekennzeichnet, dass** die Kupplungseinrichtung (26) eine Klauenkupplung ist.

10. Vorrichtung nach einem der vorstehenden Ansprüche, **dadurch gekennzeichnet, dass** der Hydraulikmotor (22) ein Außenzahnradmotor und der Generator (28) ein Gleichstromgenerator ist.

## Claims

1. Device for converting hydraulic energy into electrical energy,
comprising a hydraulic motor (22), hydraulic ports (12, 14), a generator (28) and electrical ports (34),
wherein the hydraulic motor (22) can be connected to an external supply source (P) by means of the hydraulic ports (12, 14), and
wherein the generator (28) can be connected by means of the electrical ports (34) to an electrical consumer (36) to discharge the electrical power of the generator (28) and to actuate the electrical consumer,
**characterised**
**in that** the hydraulic motor (22) has an output shaft (66), which is connected by means of a coupling apparatus (26) to a drive shaft (68) of the generator (28) to form a structural unit of the hydraulic motor (22) and the generator (28),
**in that** a support flange (74, 82) of the device having a central opening (76) serves to erect or fix the structural unit (30) in position, the coupling apparatus (26) of the shafts (66, 68) passing through said opening in a rotatable manner, and
either
**in that** two fixing flanges (78), which are diametrically opposite one another, form a central flow channel (80) on an underside of the support flange (74), said flow channel serving to guide cooling air from a fan impeller (64) of a fan motor of the generator (28), said air being guided past the support flange (74) and serving to cool the generator (28) on the hydraulic motor (22) side,
or
**in that** air slots (84) are incorporated in a flange plate of the support flange (74) in a segment-shaped manner, said slots serving to guide air for the generator (28), and in that an air opening (86) is inserted in the generator (28) on a free end face opposite the hydraulic motor (22), said air opening enabling ambient air to be supplied, which is forced through the slots (84) in the support flange (82) by a fan impeller (64) of a fan motor of the generator (28) for the purpose of cooling the hydraulic motor (22) abutting the support flange (82) on the opposite side.

2. Device according to claim 1, **characterised in that** the structural unit (30) comprises a valve apparatus (38), which controls the fluid flow between the hydraulic ports (12, 14) and the hydraulic motor (22).

3. Device according to claim 2, **characterised in that** a first valve (40), in particular in the form of a volume flow controller, as one part of the valve apparatus (38), is arranged in a feed line (20) between a pressure supply port (P) as one hydraulic port (12) and the inlet side of the hydraulic motor (22).

4. Device according to claim 3, **characterised in that** a discharge line (24) on the outlet side of the hydraulic motor (22) leads to a tank port (T) as the further hydraulic port (14) and **in that** a second valve (42), in particular in the form of a pressure compensator (44) or a stop valve (60), is connected between the feed and discharge line (20, 24) upstream of the first valve (40) in the feed direction.

5. Device according to claim 4, **characterised in that** the second valve (42) is provided in the form of the pressure compensator (44); and **in that** the feed pressures lying on opposite sides in the feed line (20) upstream and downstream of the first valve (40) in the feed direction serve as control pressures for the control piston (46) of the pressure compensator (44).

6. Device according to either claim 4 or claim 5, **characterised in that** a third valve (54), in particular in the form of a spring-loaded check valve that opens in the direction of the feed line (20), is arranged between the feed and discharge line (20, 24) downstream of the first valve (40) in the feed direction.

7. Device according to any of claims 3 to 6, **characterised in that** the first valve (40) is formed by an adjustable orifice or a proportional valve (41).

8. Device according to any of claims 3 to 7, **characterised in that** the device comprises a control line and a load sensing port (LS), and **in that** a load sensing pressure can be further conveyed via the control line to the load sensing port (LS) as a further hydraulic port downstream of the first valve (40) in the feed line (20).

9. Device according to any of the preceding claims, **characterised in that** the coupling apparatus (26) is a claw coupling.

10. Device according to any of the preceding claims, **characterised in that** the hydraulic motor (22) is an external gear motor and the generator (28) is a direct current generator.

## Revendications

1. Dispositif de transformation d'énergie hydraulique en énergie électrique,
comportant un moteur (22) hydraulique, des raccords (12, 14) hydrauliques, un générateur (28) et des bornes (34) électriques,
dans lequel le moteur (22) hydraulique peut être raccordé à une source (P) extérieure d'alimentation, au moyen des raccords (12, 14) hydrauliques, et
dans lequel le générateur (28) peut être connecté, au moyen des bornes (34) électriques, à un consommateur (36) électrique pour l'évacuation de la puissance électrique du générateur (28) et pour la commande du consommateur électrique,
**caractérisé**
**en ce que** le moteur (22) hydraulique a un arbre (66) mené, qui, au moyen d'un dispositif (26) d'accouplement, est accouplé à un arbre (68) menant du générateur (28) pour la constitution d'une unité de construction du moteur (22) hydraulique et du générateur (28),
**en ce que** pour l'érection ou la fixation de l'unité (30) de construction, est utilisée une bride (74, 82) de support du dispositif ayant une ouverture (76) médiane, dans laquelle passe, d'une façon à pouvoir tourner, le dispositif (26) d'accouplement des arbres (66, 68), et ou bien
**en ce que** deux brides (78) de fixation, opposées diamétralement l'une à l'autre sur une face inférieure de la bride (74) de support, forment au milieu un conduit (80) d'écoulement, qui sert au passage d'air de refroidissement d'une roue (64) de ventilateur d'un moteur à ventilateur du générateur (28), passage, qui en passant devant la bride (74) de support, sert au refroidissement du générateur (28) du côté du moteur (22) électrique,
ou bien
**en ce que** dans une plaque de la bride (74) de support, sont ménagées des fentes (84) d'air en forme de segment, qui servent à conduire l'air pour le générateur (28), et en ce que dans le générateur (28), est ménagée, sur un côté frontal opposé au moteur (22) hydraulique, une ouverture (86) pour de l'air, qui permet l'apport d'air ambiant, qui presse une roue (64) de ventilateur d'un moteur à ventilateur du générateur (28) par les fentes (84) de la bride (82) de support en vue du refroidissement du moteur (22) hydraulique se raccordant à la bride (82) de support du côté opposé.

2. Dispositif suivant la revendication 1, **caractérisé en ce que** l'unité (30) de construction a un dispositif (38) de soupape, qui commande le courant de fluide entre les raccords (12, 14) hydrauliques et le moteur (22) hydraulique.

3. Dispositif suivant la revendication 2, **caractérisé en ce que** dans un conduit (20) d'afflux, entre un raccord (P) d'alimentation en pression, en tant que le un raccord (12) hydraulique, et le côté d'entrée du moteur (22) hydraulique, est montée une première soupape (40), en particulier sous la forme d'un régleur de courant en volume, en tant qu'une partie du dispositif (38) de soupape.

4. Dispositif suivant la revendication 3, **caractérisé en ce qu'**un conduit (24) d'évacuation mène du côté de sortie du moteur (22) hydraulique à un raccord (T) de réservoir, en tant que l'autre raccord (14) hydraulique, et **en ce que**, entre les conduits (20, 24) d'afflux et de sortie dans la direction d'afflux est monté, avant la première soupape (40), une deuxième soupape (42), en particulier sous la forme d'une balance (44) manométrique ou d'une vanne (60) d'arrêt.

5. Dispositif suivant la revendication 4, **caractérisé en ce que** la deuxième soupape (42) est prévue sous la forme d'une balance (44) manométrique ; et **en ce que** comme pression de commande pour le piston (46) de commande de la balance (44) manométrique, sert la pression d'afflux s'appliquant du côté opposé dans le conduit (20) d'afflux avant et derrière la première soupape (40) dans la direction d'afflux.

6. Dispositif suivant la revendication 4 ou 5, **caractérisé en ce que**, entre les conduits (20, 24) d'afflux et d'évacuation est disposé dans la direction d'afflux derrière la première soupape (40), une troisième soupape (54), en particulier sous la forme d'un clapet anti-retour chargé par un ressort, qui s'ouvre dans la direction du conduit (20) d'afflux.

7. Dispositif suivant l'une des revendications 3 à 6, **caractérisé en ce que** la première soupape (40) est formée d'un diaphragme réglable ou d'une soupape (41) proportionnelle.

8. Dispositif suivant l'une des revendications 3 à 7, **caractérisé en ce que** le dispositif a un conduit de commande et un raccord (LS) load-sensing ; et **en ce que** derrière la première soupape (40) dans le conduit (20) d'afflux, une pression load-sensing peut être acheminée par le conduit de commande au raccord (LS) load-sensing en tant qu'un autre raccord hydraulique.

9. Dispositif suivant l'une des revendications précédentes, **caractérisé en ce que** le dispositif (26) d'accouplement est un accouplement à griffes.

10. Dispositif suivant l'une des revendications précédentes, **caractérisé en ce que** le moteur (22) hydraulique est un moteur à roue dentée extérieure et le générateur (28) est un générateur à courant continu.
